# FASCICULE DE BREVET EUROPEEN

(11) **EP 0 515 754 B1**
(45) Date de publication et mention de la délivrance du brevet: **11.10.1995**
(21) Numéro de dépôt: 91401359.4
(22) Date de dépôt: 28.05.1991
(51) Int. Cl.: B60T 13/567

(54) **Ensemble de commande d'un circuit hydraulique d'un véhicule**
Betätigungseinrichtung für einen Hydraulikkreis eines Fahrzeuges
Actuation assembly for a hydraulic circuit of a vehicle

(43) Date de publication de la demande: 02.12.1992
(73) Titulaire: ALLIEDSIGNAL EUROPE SERVICES TECHNIQUES, 93700 Drancy (FR)
(72) Inventeur: Meynier, Guy, F-93700 Drancy (FR)
(74) Mandataire: Bentz, Jean-Paul

(56) Documents cités:
- EP-A- 0 104 105
- EP-A- 0 148 670
- US-A- 4 469 008

## Description

La présente invention concerne un ensemble de commande d'un circuit hydraulique d'un véhicule présentant un compartiment moteur et un habitacle séparés par un tablier présentant une ouverture fermée par le dit ensemble comprenant : un servomoteur à dépression présentant un axe incluant : une tige d'actionnement faisant saillie dans l'habitacle, une coquille prévue pour être fixée dans le compartiment moteur, par sa périphérie audit tablier et à laquelle est fixé un maître cylindre, et un couvercle fermant ladite coquille et prenant appui circonférentiellement sur le tablier dans le compartiment moteur, un pédalier d'actionnement dudit servomoteur incluant au moins une pédale montée sur un levier dont le pivot est prisonnier d'une pièce d'appui solidaire dudit couvercle, de manière à transmettre sensiblement l'intégralité de la force exercée par le levier sur ledit pivot dans une direction sensiblement parallèle audit axe du servomoteur pour s'opposer à la force d'arrachement engendrée entre le dit ensemble et le dit tablier alors de l'actionnement du dit pédalier.

Des ensembles de ce type sont par exemple décrits dans les documents de brevets FR-A-2 216 154 et EP-A-0 104 105, et des ensembles voisins sont décrits dans les documents de brevets EP-A-0 148 670 et US-A-4 469 008.

Alors que tous les ensembles connus par ces documents sont spécifiquement adaptés au freinage, la présente invention a pour but de réaliser un ensemble de commande complet en tenant compte d'exigences de limitation de poids.

Selon la présente invention, le couvercle comporte une excroissance radiale à laquelle est fixé un générateur de pression commandé par un deuxième pédalier dont la pièce d'appui est solidaire du couvercle.

De préférence, le générateur de pression est un émetteur de débrayage dont le cylindre forme une seule pièce avec l'excroissance.

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessin est annexée sur laquelle :
- La Figure 1 représente schématiquement en vue latérale un ensemble conforme à la présente invention.
- La figure 2 représente schématiquement et partiellement un ensemble conforme à l'invention pourvu d'un autre mode de fixation.
- Les figures 3 et 4 illustrent schématiquement l'une de profil en coupe partielle et l'autre en vue arrière un mode de réalisation de l'ensemble selon l'invention.

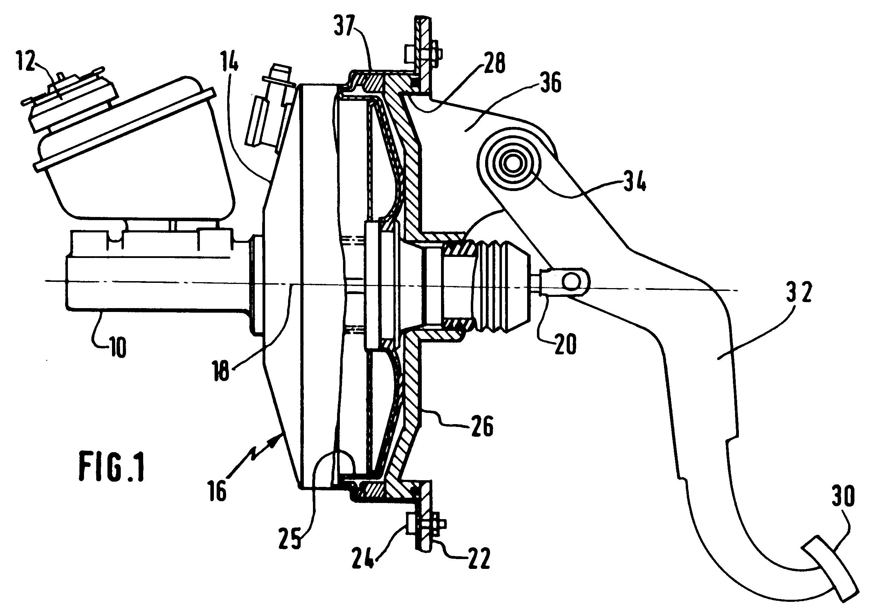

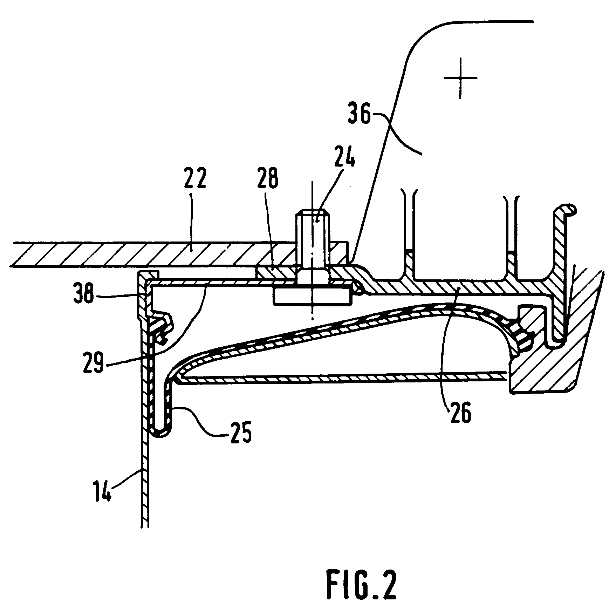

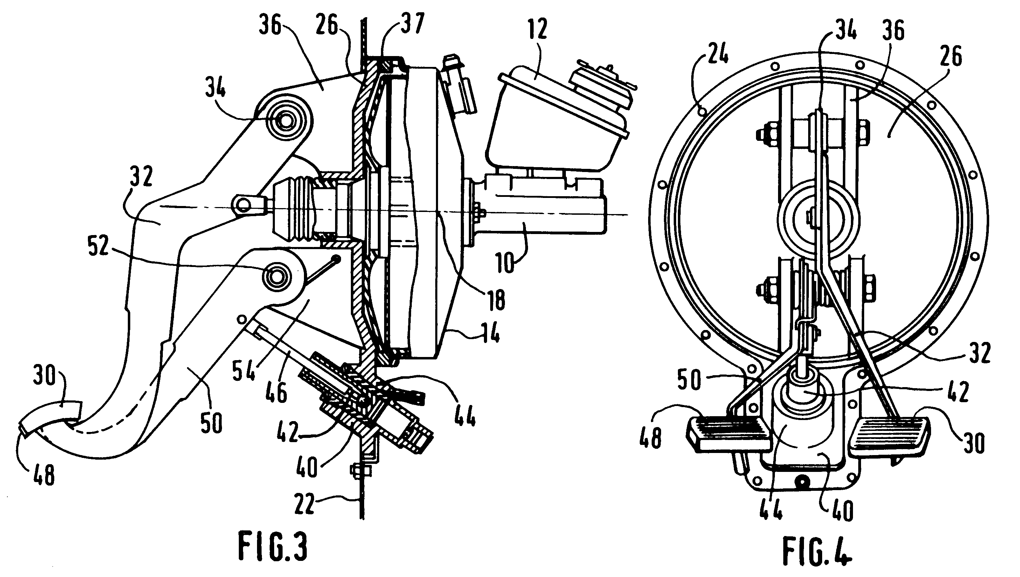

En référence maintenant à la figure 1, l'homme du métier reconnaîtra le maître cylindre 10 pourvu de son réservoir 12, fixé à la coquille 14 du servomoteur 16, dans l'axe 18 du servomoteur pourvu de sa tige d'actionnement 20. La coquille 14 est fixée à sa périphérie au tablier 22 du véhicule, par exemple, au moyen de vis 24 dans le compartiment moteur.

La coquille du servomoteur 16 est fermée au moyen d'un couvercle 26 prenant appui par sa périphérie 28 sur le tablier 22 dans le compartiment moteur.

Figure 2, on a représenté à titre d'exemple particulier un autre mode de fixation de la coquille 14 sur le tablier 22, selon lequel on utilise un disque rigide intermédiaire 29 dont l'ouverture centrale coopère avec le couvercle 26. Le bord périphérique extérieur 38 du disque 29 peut alors favorablement être recourbé pour former support de la membrane déroulante 25 du servomoteur. Alternativement, on peut également prévoir que le disque 29 et le couvercle 26 ne forment qu'une seule pièce.

On peut encore prévoir que la coquille 14 soit fixée au tablier 22 par l'intermédiaire du couvercle 26.

La tige d'actionnement 20 du servomoteur fait saillie dans l'habitacle du véhicule. Une pédale 30 est montée sur un levier 32 comportant un pivot 34, la tige d'actionnement 20 du servomoteur 16 étant fixée au levier 32 entre la pédale 30 et le pivot 34. Le pivot 34 est prisonnier d'une pièce d'appui 36 solidaire du couvercle 26. Comme on peut le constater, la projection du pivot dans le plan de fixation de l'ensemble au tablier est située à l'intérieur du périmètre de l'ouverture du tablier.

Lorsque le conducteur du véhicule ainsi équipé appuie sur la pédale 30, la force qu'il exerce est appliquée à la tige d'actionnement 20 du servomoteur 16 multipliée par le rapport du levier 32. Cette force est transmise au piston du maître cylindre 10 encore multipliée par le facteur d'assistance du servomoteur. Il se crée donc une force d'arrachement de la coquille 14 en ses points de fixation au tablier 22 dirigée sensiblement parallèlement à l'axe 18 et dirigée vers le compartiment moteur.

Cependant, la force appliquée au levier engendre sur le pivot 34 une force sensiblement parallèle à l'axe 18 et dirigée vers l'habitacle, donc opposée à la précédente. Cette force est transmise au couvercle 26 par la pièce d'appui 36. Le couvercle 26, en matériau suffisamment rigide, répartit cette force à sa périphérie et engendre sur le tablier 22 au niveau de sa périphérie 28 une force donc opposée à la force d'arrachement précitée. Il en résulte que le tablier 22 est soumis à deux forces opposées, dont la résultante correspond sensiblement à la force exercée par le conducteur. Par suite la présence d'une platine n'est plus nécessaire.

Selon un mode de réalisation préféré, la pièce d'appui 36 et le couvercle 26 ne forment qu'une seule pièce qui est réalisée par moulage, en un matériau présentant une haute résistance et une haute résilience tel qu'un matériau polymère éventuellement chargé de fibres par exemple de verre et nervuré. De préférence, un anneau 37 formant support pour la membrane déroulante du servomoteur 16, est également intégré à la pièce d'appui 36 et au couvercle 26.

Bien évidemment, l'homme du métier pourra apporter de nombreuses modifications à la présente invention sans sortir de son cadre tel que défini par les revendications annexées.

Par exemple une deuxième pièce d'appui telle que la pièce 36 pourra également être intégrée au couvercle 26 pour porter le pivot d'un autre levier pourvu d'une pédale.

Figures 3 et 4, on constate que le couvercle 26 comporte une excroissance radiale 40 à laquelle est fixé un émetteur de débrayage 42.

Le cylindre 44 de cet émetteur forme une seule pièce avec l'excroissance 40.

Le piston de l'émetteur 42 est relié, par un poussoir 46 à un pédalier d'actionnement incluant une pédale 48 montée sur un levier 50 dont le pivot 52 est prisonnier d'une pièce d'appui 54 solidaire du couvercle 26.

On pourra également prévoir que la pièce support de la colonne de direction soit également intégrée au couvercle 26.

## Revendications

1. Ensemble de commande d'un circuit hydraulique d'un véhicule présentant un compartiment moteur et un habitacle séparés par un tablier (22) présentant une ouverture fermée par le dit ensemble comprenant :
- un servomoteur à dépression (16) présentant un axe (18) incluant :
* une tige d'actionnement (20) faisant saillie dans l'habitacle,
* une coquille (14) prévue pour être fixée dans le compartiment moteur, par sa périphérie audit tablier (22) et à laquelle est fixé un maître cylindre (10), et
* un couvercle (26) fermant ladite coquille et prenant appui circonférentiellement sur le tablier (22) dans le compartiment moteur,
- un pédalier d'actionnement dudit servomoteur incluant au moins une pédale (30) montée sur un levier (32) dont le pivot (34) est prisonnier d'une pièce d'appui (36) solidaire dudit couvercle (26), de manière à transmettre sensiblement l'intégralité de la force exercée par le levier (32) sur ledit pivot (34) dans une direction sensiblement parallèle audit axe (18) du servomoteur (16) pour s'opposer à la force d'arrachement engendrée entre le dit ensemble et le dit tablier (22) lors de l'actionnement du dit pédalier, caractérisé en ce que ledit couvercle comporte une excroissance radiale (40) à laquelle est fixé un générateur de pression (42) commandé par un deuxième pédalier dont la pièce d'appui est solidaire dudit couvercle (26).

2. Ensemble selon la revendication 1, caractérisé en ce que ledit générateur de pression est un émetteur de débrayage (42) dont le cylindre (44) forme une seule pièce avec ladite excroissance (40).

## Claims

1. Control assembly for a hydraulic circuit of a vehicle having an engine compartment and a passenger compartment which are separated by a scuttle (22) having an orifice closed by the said assembly, comprising:
- a vacuum booster (16) having one axis (18) including:
* an actuating rod (20) projecting into the passenger compartment,
* a shell (14) which is intended to be fastened by its periphery to said scuttle (22) in the engine compartment and to which a master cylinder (10) is fastened, and
* a cover (26) closing said shell and bearing circumferentially on the scuttle (22) in the engine compartment,
- a pedal unit for actuating said booster, including at least one pedal (30) mounted on a lever (32), the pivot (34) of which is retained by a bearing piece (36) fixed to said cover (26), so as to transmit substantially the entirety of the force exerted by the lever (32) on said pivot (34) in a direction substantially parallel to said axis (18) of the booster (16) in order to oppose the tearing force generated between said assembly and said scuttle (22) during the actuation of said pedal unit, characterized in that said cover has a radial protuberance (40), to which is fastened a pressure generator (42) controlled by a second pedal unit, the bearing piece of which is fixed to said cover (26).

2. Assembly according to Claim 1, characterized in that said pressure generator is a clutch-release transmitter (42), the cylinder (44) of which forms one piece with said protuberance (40).

## Patentansprüche

1. Baugruppe zur Steuerung eines Hydraulikkreises eines Fahrzeuges, das einen Motorraum und einen Innenraum aufweist, die durch eine Spritzwand (22) getrennt sind, welche eine Öffnung aufweist, die von der Baugruppe verschlossen ist, welche enthält:
- einen Unterdruck-Servomotor (16) mit einer Achse (18), enthaltend:
eine Betätigungsstange (20), die in den Innenraum hineinragt;
ein Gehäuse (14), das dafür vorgesehen ist, in dem Motorraum mit seinem Umfang an der Spritzwand (22) befestigt zu werden, und an dem ein Hauptzylinder (10) befestigt ist;
eine Abdeckung (26), welche das Gehäuse verschließt und an ihrem Umfang an der Spritzwand (22) in dem Motorraum anliegt;
- eine Pedaleinheit zum Betätigen des Servomotors, mit wenigstens einem Pedal (30), das an einem Hebel (32) angebracht ist, dessen Gelenkzapfen (34) in einen Abstützelement (36) eingezwängt ist, das fest mit der Abdeckung (26) verbunden ist, so daS im wesentlichen die gesamten, von dem Hebel (32) ausgeübten Kräfte in einer zur Achse (18) des Servomotors (16) im wesentlichen parallelen Richtung auf den Gelenkzapfen (34) übertragen werden, um der Lösekraft entgegenzuwirken, die bei der Betätigung der Pedaleinheit zwischen der Baugruppe und der Spritzwand (22) erzeugt wird, dadurch gekennzeichnet, daS die Abdeckung eine radiale Ausbauchung (40) umfaßt, an der ein Druckerzeuger (42) befestigt ist, der von einer zweiten Pedaleinheit gesteuert wird, deren Abstützelement fest mit der Abdeckung (26) verbunden ist.

2. Baugruppe nach Anspruch 1, dadurch gekennzeichnet, daß der Druckerzeuger ein Kupplungs-Geber (42) ist, dessen Zylinder (44) ein einziges Teil mit der Ausbauchung (40) bildet.
